# Europäisches Patentamt
# European Patent Office
# Office européen des brevets

(11) Veröffentlichungsnummer: **0 072 479**
**B1**

(12) **EUROPÄISCHE PATENTSCHRIFT**

(45) Veröffentlichungstag der Patentschrift:
23.09.87

(21) Anmeldenummer: **82106941.6**

(22) Anmeldetag: **31.07.82**

(51) Int. Cl.⁴: **H 04 B 3/14**, H 04 H 3/00

(54) **Anordnung zum Ausgleich von Amplituden- und Phasenverzerrungen in einem Gleichwellenfunknetz.**

(30) Priorität: **13.08.81 DE 3132011**
**13.08.81 DE 3132012**

(43) Veröffentlichungstag der Anmeldung:
**23.02.83 Patentblatt 83/8**

(45) Bekanntmachung des Hinweises auf die Patenterteilung:
**23.09.87 Patentblatt 87/39**

(84) Benannte Vertragsstaaten:
**AT BE CH DE GB LI LU NL**

(56) Entgegenhaltungen:
**DE-A-2 812 774**
**DE-B-2 430 465**
**US-A-3 715 666**
**US-A-4 255 814**

**1980 IEEE INTERNATIONAL SYMPOSIUM ON CIRCUITS AND SYSTEMS PROCEEDINGS, Band 2, 28.-30. April 1980, Houston, Texas, US, Seiten 646-649, New York, US; K. NISHIKAWA et al.: "Variable bandpass attenuation and delay equalizers using complex coefficient transversal filter"**

(73) Patentinhaber: **Licentia Patent- Verwaltungs- GmbH, Theodor- Stern- Kai 1, D-6000 Frankfurt/Main 70 (DE)**

(72) Erfinder: **Bitzer, Eberhard, Dr. Ing., Franziskusweg 45, D-7900 Ulm (DE)**
Erfinder: **Grünes, Reinhard, Stifterweg 53, D-7900 Ulm (DE)**

(74) Vertreter: **Langer, Karl- Heinz, Dipl.- Ing., Licentia Patent- Verwaltungs- GmbH Theodor- Stern- Kai 1, D-6000 Frankfurt/Main 70 (DE)**

LIBER, STOCKHOLM 1987

**Beschreibung**

Die Erfindung betrifft eine Anordnung nach dem Oberbegriff des Patentanspruchs 1.

Im einem Gleichwellenfunknetz wird das Modulationssignal von einer Zentralstation über Modulationszubringerstrecken zu mehrerem Sendestationen übertragen, vom denen das Signal mit gleicher HF-Frequenz und gleicher NF-Amplitude, NF-Phase und gleicher Zeitlage abgestrahlt wird. Um einem ungestörten und interferenzfreien Empfang zu gewährleisten, müssen die Verzerrungen und unterschiedlichen Laufzeiten der Modulationszubringer ausgeglichen werden. Nach dem Stand der Technik geschieht dies mit Hilfe geeigneter Netzwerke zur Entzerrung des Frequenzgangs und zum Ausgleich der Signallaufzeit, die einzeln per Handabgleich an die Charakteristik des jeweiligen Modulationszubringers angepaßt werden. Jede Änderung der Eigenschaften des Modulationszubringers erfordert einen erneuten manuellen Abgleich der Netzwerke. Es ist einsichtig, daß dieses Verfahren nur für Standleitungen oder feste Funkverbindungen geeignet ist und einen hohen Personalaufwand zur Einmessung und Wartung der Ausgleichsnetzwerke erfordert.

Aus der US-A-37 15 666 ist eine Anordnung zur Ausgleich von Amplituden- und Phasenverzerrungen auf digitalen Übertragungsstrecken bekannt, bei der die Empfängerseite der Übertragungsstrecke ein Entzerrernetzwerk mit Transversalfilterstruktur aufweist. Die Einstellung der Filterkoeffizienten erfolgt mit Hilfe eines digitalen Testsignals, welches zu Anfang einer Nachrichtenaussendung oder periodisch wiederholt von der Senderseite ausgesendet wird. Das auf der Übertragungsstrecke verzerrte Testsignal wird auf der Empfängerseite mit einem unverzerrten Testsignal verglichen; aufgrund des Vergleichsergebnisses werden gemäß einem Adaptionstionsalgorithmus die Filterkoeffizieten des Transversalfilters eingestellt.

Aus der DE-B-24 30 465 ist es bekannt, adaptive Entzerrer zur Entzerrung von analogen Fernsehsignalen zu verwenden.

In der DE-A-30 20 176, veröffentlicht am 3.12.1981, wird bereits vorgeschlagen, die zeitgleiche Aussendung von Nachrichten über mehrere Gleichwellensender durch Steuersignale zu gewährleisten, die von einem Zeitsignalsender oder ähnlichen Einrichtungen hergeleitet werden.

Die Erfindung setzt sich zur Aufgabe, eine Anordnung der eingangs genannten Art mit einer sich automatisch an den jeweiligen Modulationszubringer adaptierenden Filterstruktur zum Ausgleich der Verzerrungen und der Laufzeit anzugeben. Die Lösung dieser Aufgabe ist den Merkmalen des kennzeichnenden Teils des Patentanspruchs 1 zu entnehmen, wobei Patentschutz nur für die Kombination dieser Merkmale begehrt wird. Die weiteren Ansprüche beinhalten vorteilhafte Weiterbildungen bzw. Ausführungen der Erfindung.

Die Vorteile der erfindungsgemäßen Lösung liegen zunächst in der Einsparung der erforderlichen Ingenieursleistung zur Vermessung der Eigenschaften des Modulationszubringers und der Einstellung der Netzwerke zur Entzerrung und zum Laufzeitausgleich, darüber hinaus auch in der erheblichen Zeitersparnis beim Abgleich selbst. Ferner gestattet die selbst adaptierende Entzerrung den Einsatz nicht festgeschalteter Wählverbinduigen als Modulationszubringer. Weiter ist die Genauigkeit und Qualität der adaptiven Entzerrungsstruktur manuell eingestellten Netzwerken überlegen.

Die Erfindung wird num anhand der Figuren näher erläutert.

Es zeigen:

FIG. 1: Ein Beispiel für ein Gleichwellenfunknetz mit drei Sendestationen und herkömmlichen Netzwerken zur Entzerrung und zum Laufzeitausgleich.

FIG. 2: Prinzipielles Blockschaltbild des adaptiven Entzerrernetzwerks gemäß der Erfindung mit geeigneten Mitteln zur Steuerung und Speicherung des digitalen Testsignals auf der Empfängerseite im Modulationsempfänger der Gleichwellensender.

FIG. 3: Blockschaltbild zur Steuerung und Speicherung des digitalen Testsignals auf der Senderseite in der Zentralstation eines Gleichwellenfunknetzes.

FIG. 4: Ausführung des erfindungsgemäßen Entzerrers für Bandpaßentzerrung.

FIG. 5: Beispiel für die Formung des Leistungsdichtespektrums des Testsignals durch eine Partial-Response-Codierung.

FIG. 6: Zeitdiagramme zur Erklärung der zeitgleichen Abstrahlung von Gleichwellensendern.

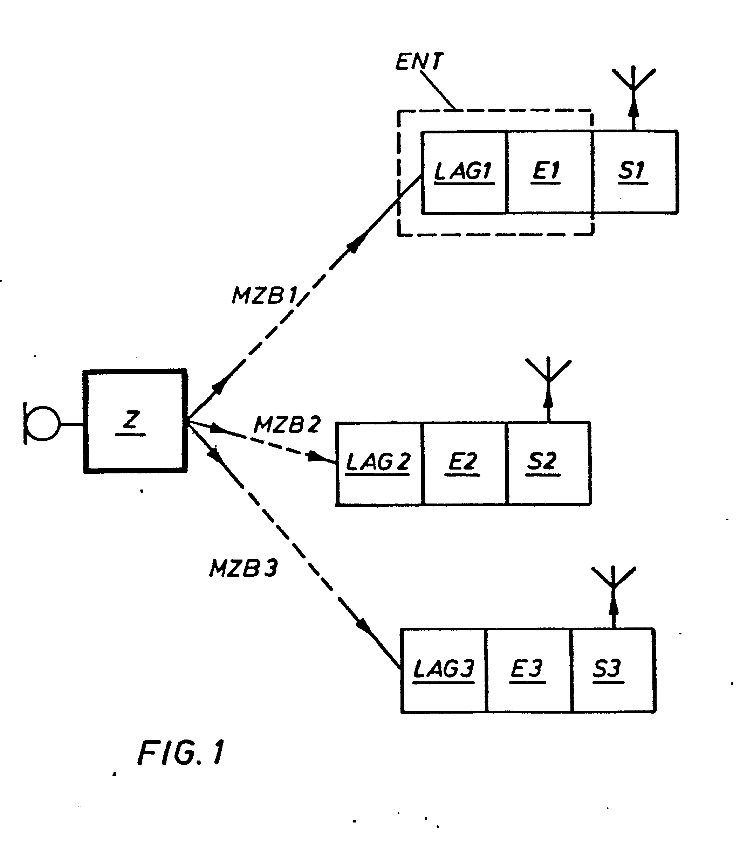

FIG. 1 stellt ein Beispiel für ein Funknetz nach dem Stand der Technik dar. Eine Zentrale Z versorgt drei Gleichwellen-Sendestationen S1, S2 und S3 über die Modulationszubringer MZB1, MZB2 und MZB3. Die Modulationszubringer sind festgeschaltete Standleitungen oder Funkverbindungen. Um eine unverzerrte und zeitgleiche Abstrahlung von den Sendestationen zu erreichen, werden die Signallaufzeiten durch die Netzwerke LAG1, LAG2 und LAG3 abgeglichen, und die Signalverzerrungen auf Grund der Modulationszubringer mit Hilfe der Entzerrerfilter E1, E2 und E3 aufgehoben. Wie erläutet, müssen Laufseitausgleich und Entzerrer gegenwärtig manuell eingestellt werden. Gemäß der Erfindung wird nun vorgeschlagen, Laufzeitausgleich und Entzerrung, die man zu einem gemeinsamen Netzwerk ENT zusammenfassen kann, durch ein selbst adaptierendes Filter vorzunehmen.

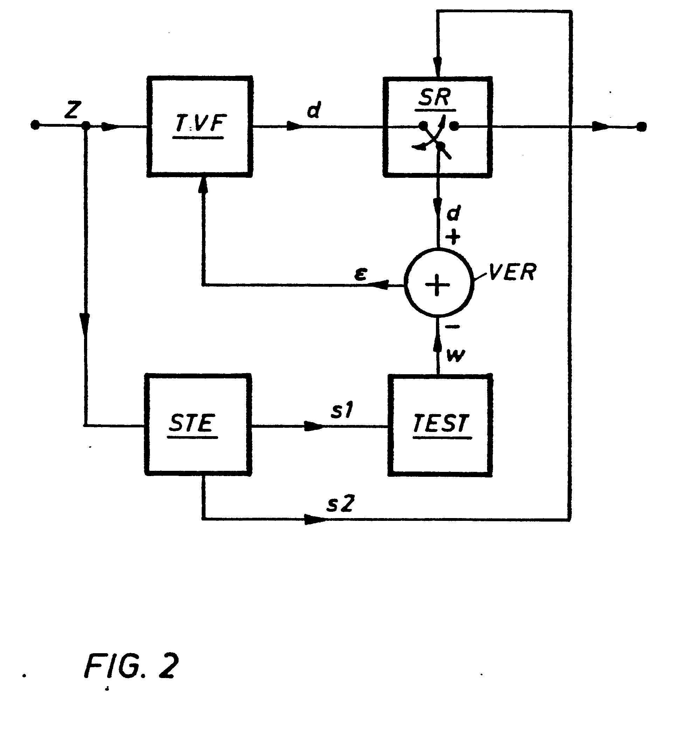

FIG. 2 stellt eine Ausführungsform der Erfindung dar, und zwar für die Empfangsseite. Sie besteht im wesentlichen aus einem adaptiven Transversalfilter TVF und zusätzlichen Bausteinen

SR, TEST, VER und STE, die zur Adaption des Transversalfilters benötigt werden. Das Transversalfilter ist in bekannter Art aufgebaut und besteht aus m Koeffizienten und (m-1) Laufzeitgleidern mit der Verzögerung τ. Die Verzögerung τ berechnet man unmittelbar aus der zu entzerrenden Bandbreite $f_B$ der Übertragungsstrecke. Es gilt:

$$\tau = 1/(2\,f_B) \text{ (Basisbandentzerrung) (1)}$$
oder
$$\tau = 1/f_B \text{ (Bandpaßentzerrung) (2).}$$

Der Unterschied zwischen beiden Versionen der Entzerrung wird weiter unten noch erläutert. Es soll zunächst von einer Basisbandentzerrung ausgegangen werden. Die benötigte Zahl m der Filterkoeffizienten hängt von den Verzerrungen der Modulationszubringer und dem nötigten Laufzeitausgleich ab. Für typische Anwendungen, etwa Draht- oder TF-Strecken, dürfte die Zahl zwischen 10 und 20 liegen. Die Erfindung beruht nun auf dem Gedanken, die Entzerrung der Übertragungsstrecken, die für analoge Signale ausgelegt sind, durch Transversalsfilter vorzunehmen, die mit digitalen Signalen adaptiert werden.

Hierdurch gewinnt man die Vorzüge einer schnellen, genauen und vergleichsweise einfach realisierbaren Entzerrung, die in der digitalen Übertragungstechnik seit langem genutzt werden, auch für analoge Übertragungsverfahren.

Die Adaption der Transversalfilterkoeffizienten erfolgt mit Hilfe eines anfänglich gesendeten digitalen Testsignals, das der Empfängerseite in unverzerrter Form bekannt ist und dort in einem Baustein TEST abgespeichert ist. Da das Testsignal den Charakter einer Pseudo-Noise-Folge haben muß, läßt sich der Speicher TEST z. B. einfach als rückgekoppeltes Schieberegister realisieren. Die Schrittdauer des digitalen Testsignals ist genau π nach Gleichung (1) oder Gleichung (2). Die Länge des Testsiginals hängt von der Zahl m der Koeffizienten und dem gewählten Adaptionsverfahren ab. Typisch sollte man mindestens das 10 - 30-fache der Koeffizientenzahl m als Schrittzahl des Testsipinals vorsehen. Wenn zeitlich variable Modulationszubringer verwendet werden, ist das Testsignal in geeiginetem Zeitabstand periodisch zu wiederholen.

Der Beginn des Adaptionsvorganges wird eingeleitet von einer Steuereinheit STE, die durch einen Steuerimpuls S1 das Auslesen des Testsignals W aus dem Speicher TEST bewirkt. Weiter schaltet die Steuereinheit STE durch einen Steuerimpuls S2 einen Schalter SR derart, daß das empfangene Signal d zu einem Summenpunkt VER gelangt und hier durch die Subtraktion des unverzerrten Testsignals W ein Fehlersiginal ε gewonnen wird. Mit Hilfe des Fehlersignals können die Filterkoeffizienten nach einem geeigneten bekannten Adaptionsalgorithmus eingestellt werden. Eine Übersicht über gebräuchliche Algorithmen findet man z. B. in der Veröffentlichung "Advances in equalization for intersymbol interference" von J.G. Proakis aus Advances in communication systems, Vol. 4, Academic Press, New York, 1975. Vorzugsweise sollte man im Hinblick auf den Realisierungsaufwand den einfachen stochastischen Gradientenalgorithmus wählen, der in der angegebenen Literaturstelle ausführlich beschrieben ist und deshalb hier nicht mehr erläutert zu werden braucht. Nach Ende der digitalen Testfolge sorgt die Steuereinheit STE dafür, daß der Schalter SR wieder auf Normalbetrieb zurückgestellt wird, die adaptiv gewonnene Einstellung der Filterkoeffizienten erhalten bleibt und der Speicher TEST abgeschaltet wird bzw. wieder in den Ausganszustand für eine erneute Adaption gelangt.

Es ist klar, daß man durch den zeitlichen Beginn der Adaption die absolute Laufzeit des Signals durch das gesamte System aus Modulationszubringer und Entzerrer festlegt.

De zeitliche Lage der Steuerimpulse zum Beginn der Adaption muß darum so gewählt werden, daß eine zeitgleiche Abstrahlung von allen Gleichwellen-Sendestationen erfolgt. Bei bekannter Laufzeit des Modulationszubringers ist dies leicht zu erreichen. Sollte diese Voraussetzung nicht gegeben sein, so läßt sich die Erfindung gemäß Anspruch 6 auf eine automatischen absoluten Laufzeitausgleich erweitern. Diese Erweiterung wird später erläutert.

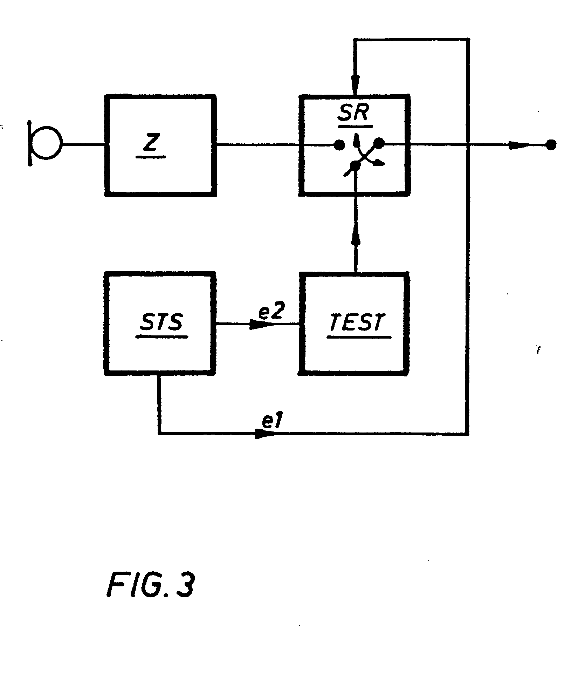

FIG. 3 zeigt die Mittel, die das Aussenden des digitalen Testsignals in der Zentralstation Z verlangt. Eine Steuereinheit STS schaltet ähnlich wie auf der Empfängerseite das digitale Testsignal, das aus einem Speicher TEST abrufbar ist, mittels eines Schalters SR ein. Nach Abschluß des Testsignals sorgt die Steuerung STS dafür, daß der Schalter SR wieder in die Normalstellung zurückgeht und das Testsignal abgeschaltet wird.

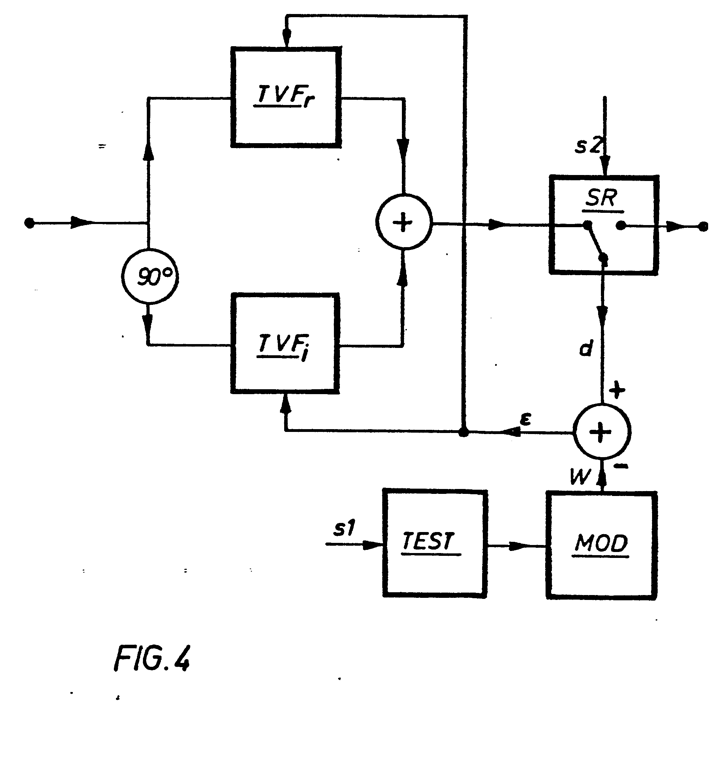

Die bisher unterstellte Annahme, daß eine Basisbandentzerrung vorgenommen wird, wird für viele Übertagungsstrecken, die als Bandpaßsysteme ausgelegt sind, nicht zutreffen. Man muß in diesem Fall den Entzerrer als Bandpaßentzerrer realisieren, wie dies in prinzip in FIG. 4 gezeigt ist. Real- und Imaginärteil der Bandpaßimpulsantwort müssen jeweils getrennt durch Transversalfilter $TVF_r$ und $TVF_i$ entzerrt werder, wobei für den Imaginärteilentzerrer $TVF_i$ ein 90°-Phasenschieber verwendet werden muß. Weiter muß das Vergleichssignal als Bandpaßsignal zur Verfügung stehen, wozu ein Modulator MOD benötigt wird. Schließlich muß der gleiche Modulator auch im Steuerteil der Senderseite eingesetzt werden. Vorzugsweise wird man ein einfaches Modulationsverfahren wählen, z. B. die binäre Phasentastung. Sinngemäß läßt sich die in FIG. 4 gezeigte Bandpaßentzerrung nach vorheriger Abwärtsmischung auch als Basisbandentzerrer

für Real- und Imaginärteil ausbilden. Da das Stand der Technik ist, soll hierauf nicht weiter eingegangen werden.

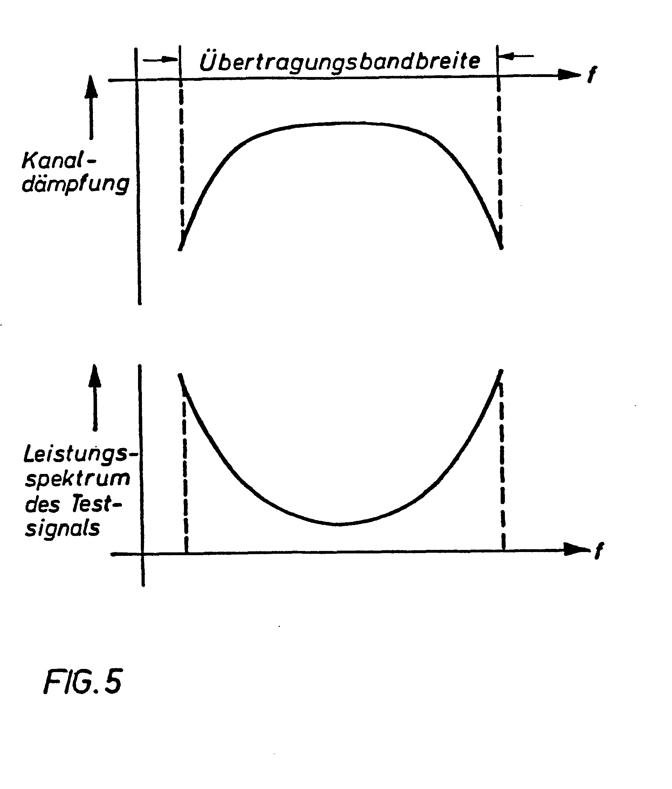

Mit den bisher beschriebenen Anordnungen kann es bei manchen Übertragungsstrecken vorkommen, daß starke Dämpfungseinbrüche innerhalb der Übertragungsbandbreite nicht hinreichend genau entzerrt werden und folglich unzulässig hohe Restverzerrungen übrigbleiben. Ein Beispiel ist in FIG. 5 dargestellt, in den die Dämpfung zu den Rändern des Übertragungsbereiches hin stark ansteigt. Im Leistungsspektrum des Fehlersignals ε ist wegen der Dämpfungsbeinbrüche vergleichsweise wenig Information über diese Bereiche enthalten, so daß der Enzerrer gerade in den Frequenzbereichen, in denen er besonders genau adaptieren müßte, ungenau und fehlerhaft arbeitet. Diesem unerwünschten Effekt kann man durch eine geeignete Formung des Leistungsspektrums des digitalen Testsignals entgegenwirken, da man meist eine grobe Information über die Lage und Größe der Dämpfungseinbrüche der Übertragungsstrecke besitzt. Besonders geeignet für die Formung des Leistungsspektrums sind die Partial-Response-Codes, die z. B. in der Veröffentlichung "Generalization of a Technique for Binary Data Communication" von E.R. Kretzmer, IEEE Trans. Commun. COM-14 (1966), Seiten 67-68 beschrieben sind. Man muß den Code so auswählen, daß das Leistungsspektrum des codierten Testsignals gerade an den Stellen Maxima aufweist, wo mit starken Dämpfungseinbrüchen der Übertragungsstrecke zu rechnen ist. Für das Beispiel aus FIG. 4 mit Dämpfungseinbrüchen an den Rändern des Übertragungsbereiches ist insbesondere der Bipolar-Code erster Ordnung (auch als AMI-Code bekannt) geeignet.

Die Partial-Response-Codierung bietet weiter den Vorteil, die Entzerrung in Basisbandtechnik auch dann noch einsetzen zu können, wenn die Übertragungsstrecke keinen Gleichanteil übertragen kann. Man muß dann für das Testsignal einen Code wählen, der im Basisband ein Signalleistungsspektrum ohne Gleichkomponente erzeugt. Besonders geeignet ist hier neben dem schon erwähnten Bipolar-Code erster Ordnung auch der Bipolar-Code zweiter Ordnung.

Eine alternative Ausführung der Erfindung besteht darin, anstelle des Transversalfilerentzerrers ein rekursives Filter mit Laufzeiten nach Gleichung (1) oder (2) einzusetzen. Die Einstellung der Koeffizinenten des Rekursivfilters kann nach den gleichen Adaptionsalgorithmen, die für das Transversalfilter gelten, vorgenommen werden, vorzugsweise wieder durch den stochastischen Gradientenalgorithmus.

Eine vorteilhafte Erweiterung der Erfindung. besteht darin, für einen automatischen absoluten Laufzeitausgleich der Modulationszubringer auch bei nicht bekannten oder wechselnden Laufzeiten zu sorgen. Wie schon erwähnt, wird, die Laufzeit über das gesamte System aus Modulationszubringer und Entzerrer durch den zeitlichen Beginn des Adaptionsvorgangs, mithin also durch die Zeitlage des Steuersignals festgelegt. Innerhalb gewisser Grenzen, die in etwa durch die zeitlich wirksame Eintzerrerlänge $(m-1) \cdot \tau$ abgesteckt werden, kann man darum durch Veränderung der Zeitlage des Steuersignals die Signallaufzeit variieren. Insbesondere erreicht man die geforderte zeitsynchrone Abstrahlung von den Gleichwellen-Sendestationen durch den zeitsynchronen Beginn der Adaption in allen Sendestationen. Hierbei muß man natürlich alle Laufzeiten auf die längste zulässige Laufzeit im Netz hin verlängern.

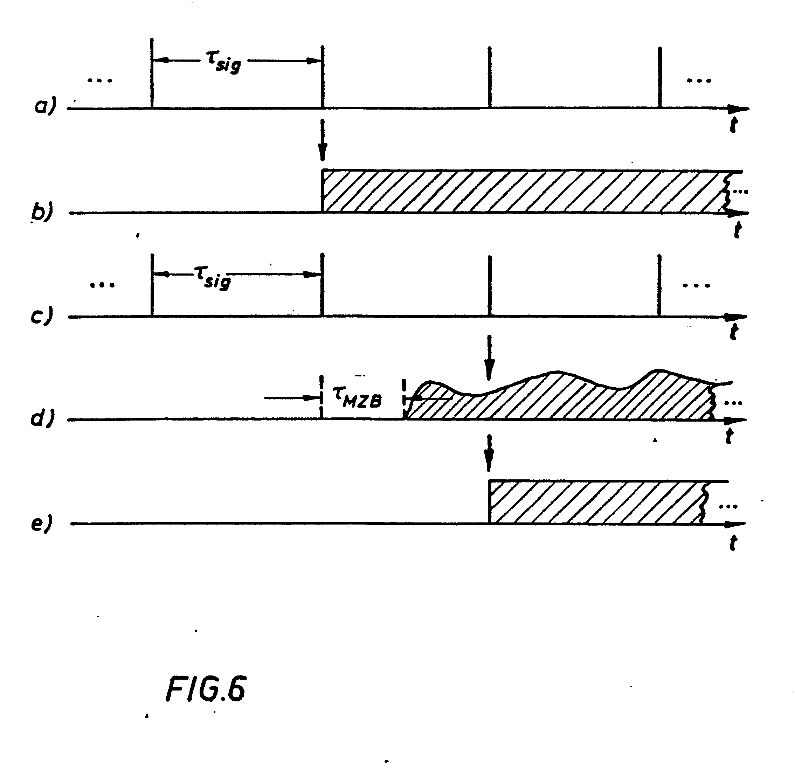

Als besonders einfache Realisierung der zeitsynchronen Adaption wird der Bezug auf ein externes und sehr genaues Zeitsiginal vorgeschlagen, wie es etwa in der Bundesrepublik Deutschland durch den Zeitsignalsender DCF 77 ausgestrahlt wird. In FIG. 6 wird das Prinzip anhand eines Zeitdiagramms erläutert. Zunächst benötigt man in den Steuerteilen STS und STE der FIG. 2 und FIG. 3 Zusatzeinrichtungen zum Empfang des Zeitsignals und zur Bildung synchroner Impulsfolgen zur Zeitmarkierung. Diese Zusatzeinrichtungen erzeugen aus dem Zeitsignal zeitlich synchrone Impulsfolgen in der Zentrale (FIG. 6A) und in den Sendestationen (FIG. 6C).

Der zeitliche Abstand der Impulsfolge entspricht genau der vorzugebenden Signallaufzeit $\tau_{sig}$. Diese sollte etwas größer gewählt werden als die maximale Laufzeit der Modulationszubringer, um zum einen mögliche statistische Schwankungen und Meßungenauigkeiten auch bei der maximalen Laufzeit zulassen zu können, und um zum anderen Verzögerungen durch die Ausführung von Steueroperationen zu berücksichtigen. Ferner können hier auch Gesichtspunkte zur bequemen Herleitung der Impulsfolge aus dem Zeitsignal einfließen.

Es wird nun vereinbart, daß der Beginn des digitalen Testsignals in der Zentrale immer mit dem Auftreten der kurzen Synchronimpulse (oder der positiven oder negativen Flanken der Impulse etc.) zusammenfällt (FIG. 6B).

Der Beginn der Adaption an den Gleichwellen-Sendestationen ist gleichfalls an das Auftreten der Synchronimpulse gekoppelt. Unabhängig davon, mit welcher Zeitverzögerung $\tau_{MZB} < \tau_{sig}$ das verzerrte digitale Testsignal d an den Vergleichspunkt VER gelangt (FIG. 6D), sorgt die Steuerung STE für den zeitrichtigen Beginn der Adaption, indem sie das unverzerrte Vergleichssignal W erst beim Auftreten der nächsten Zeitmarkierung an den Vergleichspunkt schaltet (FIG. 6E). Es ist einsichtig, daß auf diese Weise die gleiche Signallaufzeit $\tau_{sig}$ für alle Sendestationen eingestellt wird.

Abhängig von den Übertragungsverzerrungen innerhalb des an sich möglichen Bereiches des Zeitausgleichs können Laufzeiten existieren, für die die erreichbare Entzerrungsqualität schlecht ist. Man kann diesen Effekt vermeiden oder zumindest deutlich unterdrücken, wenn man die Laufzeiten im Entzerrerfilter auf den Wert $\tau'$

$$\tau' = \tau/n \; ; \; n = 1, 2, 3, \ldots (3)$$

mit $\tau$ nach Gl. (1) oder Gl. (2) verkürzt. Um damit nicht gleichzeitig die zeitlich wirksame Entzerrerlänge zu stark zu verringern, ist die Wahl $n = 2$ oder $n = 3$ zweckmäßig.

Schließlich kann der Fall auftreten, daß der geforderte Laufzeitausgleich die wirksame zeitliche Entzerrerlänge erreicht oder gar übertrifft. In diesem Fall kann der Entzerrer nur noch durch große Einbußen an Entzerrungsqualität oder überhaupt nicht mehr die geforderte Signallaufzeit einhalten. Man schaltet dann ein zusätzliches Laufzeitwerk nach herkömmlicher Art vor das Entzerrernetzwerk. Der Laufzeitabgleich braucht jedoch nur grob vorgenommen zu werden, weil die genaue Einstellung adaptiv durch den Entzerrer erfolgt.

Der grobe Laufzeitausgleich kann auch auf einfache Weise automatisiert werden. Als Laufzeitglieder sind bei den Modulationsempfängern z. B. Eimerkettenschaltungen installiert, deren Takt einstellbar ist. Je höher die Taktfrequenz, um so schneller durchläuft ein analoges Signal die Eimerketten, um so geringer also die Verzögerung. Zusätzlich zum Empfänger für den Sender DCF 77 (o. ä.) und die Einrichtung zur Erzeugung der Taktimpulsfolgen - vgl. oben - benötigen die Modulationsempfänger noch einen Zähler. Dieser wird mit jedem Taktimpuls neu gestartet. Das digitale Testsignal wird von der Zentrale bei einem Taktimpuls ausgesendet und stopt den Zähler, sobald es im Modulationsempfänger angelangt ist. Proportional zum erreichten Zählerstand kann nun der Takt der Eimerkettenschaltungen automatisch eingestellt werden. Das digitale Testsignal kann anschließend zur adaptiven Entzerrung weiterverwendet werden.

Es ist nachteilig, wenn der Zähler ständig läuft; er muß jedoch spätestens mit dem Taktimpuls in Betrieb sein, an dem die Zentrale das digitale Testsignal aussendet. Bei anwählbaren Modulationszubringern kann dieses Problem gelöst werden, indem der Zähler nur in Betrieb gesetzt wird, wenn eine Verbindung durchgeschaltet worden ist. Nach Einstellung des Takts der Eimerkettenschaltungen kann der Zähler wieder stillgesetzt werden.

Als alternative Möglichkeit kann man den Zähler erst mit dem eintreffenden digitalen Testsignal starten und mit dem nächsten Taktimpuls anhalten. Der Takt der Eimerkettenschaltungen wird dann umgekehrt proportional zum Zählerstand eingestellt. Der Zähler läuft also nur kurzfristig.

Anstelle der Eimerketten können auch passive Laufzeitnetzwerke mit schaltbaren Anzapfungen verwendet werden.

Eine weitere Möglichkeit, den groben Laufzeitvorabgleich zu automatisieren besteht darin, vor dem Aussenden des digitalen Testsignals eine Zeitmarke von der Zentrale aus über die Modulationszubringer zu schicken. Dazu weisen z. B. die Zentrale und die Gleichwellensender digitale Uhren auf, die vom Sender DCF 77 (oder einer ähnlichen Einrichtung) synchronisiert werden. Die Uhr gibt die momentane Uhrzeit in binärer Form ab. In der Zentrale wird die momentane Uhrzeit in einer Logikschaltung um die längstmögliche Laufzeit der Modulationszubringer vorgestellt und dann zu den Gleichwellensendern geschickt. Diese weisen einen Uhrzeitvergleicher auf, in dem die ankommende vorgestellte Uhrzeit mit der aktuellen Uhrzeit verglichen wird. Die ermittelte Zeitdifferenz gibt an, um wieviel das Modulationssignal noch verzögert werden muß, damit es von allen Gleichwellensendern synchron abgestrahlt wird. Der grobe Laufzeitvorabgleich wird entsprechend eingestellt.

**Patentansprüche**

1. Anordnung zum zeitgleichen Aussenden von Nachrichten, welche von einer Zentrale (Z) ausgehen, über mehrere Gleichwellensender (S1 bis S3), sowie zum Ausgleich von Amplituden- und Phasenverzerrungen, welche die Nachrichten auf den Modulationszubringern (MZB1 bis MZB3) erleiden, gekennzeichnet durch folgende Merkmale:
- die Modulationsempfänger der Gleichwellensender weisen Entzerrungsnetzwerke mit Transversalfilterstruktur (TVF) auf,
- die Laufzeiten $\tau$ im Transversalfilter sind durch die zu entzerrende Bandbreite der Modulationszubringer festgelegt,
- die Einstellung der Filterkoeffizienten des Transversalfilters (TVF) erfolgt mit Hilfe eines digitalen Testsignals der Schrittdauer $\tau$, welches zu Anfang einer Nachrichtenaussendung oder periodisch wiederholt von der Zentrale ausgesendet wird.
- das auf dem Modulationszubringer verzerrte Testsignal (d) wird im Modulationsempfänger der Gleichwellensender mit einem unverzerrten Testsignal (W) verglichen,
- auf Grund des Vergleichsergebnisses werden die Filterkoeffizienten des Transversalfilters (TVF) gemäß dem stochastischen Gradientenalgorithmus oder einem anderen bekannten Adaptionsalgorithmus eingestellt,
- die Zentrale und Gleichwellensender weisen Mittel zur Speicherung (TEST), Steuerung (STS bzw. STE) und zum Vergleich (VER) des digitalen Testsignals auf,
- die zeitsynchrone Aussendung von den Gleichwellensendern ist dadurch gewährleistet, daß der Adaptionsvorgang durch geeignete Steuersignale zeitgleich an allen Sendestationen stattfinden und dieser mindestens um die längste zulässige Signalaufzeit im Gleichwellenfunknetz verzögert beginnt.

2. Anordnung nach Anspruch 1, dadurch gekennzeichnet, daß das Entzerrernetzwerk als Basisbandentzerrer und das digitale Testsignal als Basisbandsignal ausgelegt sind.

3. Anordnung nach Anspruch 1, dadurch gekennzeichnet, daß das Entzerrernetzwerk als Bandpaßentzerrer mit komplexen Koeffizienten und das digitale Testsignal zur Adaption als Bandpaßsignal ausgelegt sind.

4. Anordnung nach einem der Ansprüche 1 bis 3, dadurch gekennzeichnet, daß das digitale Testsignal gemäß den bekannten Gesetzen der Partial-Response Codierung ausgebildet ist.

5. Anordnung nach einem der Ansprüche 1 bis 4, dadurch gekennzeichnet, daß das Transversalfilter durch ein adaptives rekursives Filter ersetzt ist.

6. Anordnung nach Anspruch 1, dadurch gekennzeichnet, daß die zeitsynchrone Lage der Steuersignale zum Start der Adaption von einem Zeitsignalsender oder ähnlichen Einrichtungen hergeleitet ist.

7. Anordnung nach einem der Ansprüche 1 bis 6 dadurch gekennzeichnet, daß die Laufzeiten in den Entzerrerfiltern zum genaueren und bequemeren Ausgleich der Signallaufzeitunterschiede nur noch den n-ten Teil der Schrittdauer des digitalen Testsignals betragen.

8. Anordnung nach einem der Ansprühe 1 bis 7 dadurch gekennzeichnet, daß bei großen absoluten Laufzeitdifferenzen in der Größenordnung der wirksamen zeitlichen Entzerrerlänge und darüber hinaus ein nichtadaptiv ausgelegter grober Vorabgleich der Laufzeit in herkömmlicher Weise erfolgt.

9. Anordnung nach Anspruch 6 und 8 gekennzeichnet, daß als grober Vorabgleich der Laufzeit eine Eimerkettenschaltung mit einstellbarem Takt bei den Modulationsempfängern vorgesehen ist, daß das digitale Testsignal von der Zentrale auf einen vom Zeitsignalsender abgeleiteten Taktimpuls hin ausgesendet wird, daß die Modulationsempfänger Zähler aufweisen, die mit jedem Taktimpuls neu gestartet werden, und daß der Takt der Eimerkettenschaltung proportional zum Zählerstand eingestellt wird, den der Zähler bei Eintreffen des digitalen Testsignals erreicht hat.

10. Anordnung nach Anspruch 6 und 8 gekennzeichnet, daß als grober Vorabgleich der Laufzeit eine Eimerkettenschaltung mit einstellbarem Takt bei den Modulationsempfängern vorgesehen ist, sowie ein Zähler, daß das digitale Testsignal von der Zentrale auf einen vom Zeitsignalsender abgeleiteten Taktimpuls hin ausgesendet wird und bei Eintreffen im Modulationsempfänger den Zähler startet, daß der Zähler mit dem nächsten Taktimpuls gestopt wird, und daß der Takt der Eimerkettanschaltung umgekehrt proportional zum dann erreichten Zählerstand eingestellt wird.

11. Anordnung nach Anspruch 9 oder 10 dadurch gekennzeichnet, daß anstelle der Eimerkettenschaltung passive Netzwerke vorgesehen sind mit schaltbaren Anzapfungen.

12. Anordnung nach Anspruch 6 und 8 dadurch gekennzeichet, daß die Zentrale und die Gleichwellensender jeweils eine digitale Uhr aufweisen, die vom Zeitzeichensender synchronisiert ist, daß die Zentrale eine Logikschaltung aufweist, welcher die Uhrzeit in binärer Form zugeführt wird, und in welcher die Uhrzeit um die längstmögliche Laufzeit der Modulationszubringer vorgestellt wird, daß vor Aussenden des digitalen Testsignals die vorgestellte Uhrzeit über die Modulationszubringer den Gleichwellansendern übermittelt und dort mit der aktuellen Uhrzeit in einem Uhrzeitvergleicher verglichen wird, und daß der grobe Vorabgleich der Laufzeit automatisch in der Größe der ermittelten Uhrzeitdifferenz erfolgt.

**Claims**

1. An arrangement for the synchronous transmission of messages, which are transmitted from a central station (Z), over several simultaneous broadcasting transmitter, (S1 to S3), also for the compensation of amplitude and phase distortion, from which the messages on modulation feeder, (MZS1 to MZS3) suffer, characterized by the following features:

- The modulation receivers of the simultaneous broadcasting transmitters have distortion correction network with a transversal filter structure (TVF),

- the transit times $\tau$ in the transversal filter determined by the bandwidth for which distortions are to be corrected of the modulation feeders,

- the adjustment of the filter coefficients of the transversal filter (TVF) takes place by mean, of a digital test signal having the step duration $\tau$, which is transmitted from the central station at the commencement of a message transmission or is repeated periodically from the central station,

- the test signal (d) which is distorted on the modulation feeder is compared in the modulation receiver of the simultaneous broadcasting transmitter with an undistorted test signal (W),

- based on the result of the comparison the filter coefficient, of the transversal filter (TVF) are adjusted according to the stochastic gradient algorithm or according to another known adaptation algorithm,

- the central station and the simultaneous broadcasting transmitters have means for the storage (TEST), control (STS and STE) and for the comparison (VER) of the digital test signal,

- the time-synchronized transmission from the simultaneous broadcasting transmitters is guaranteed in that the adaptation process takes place simultaneously at all transmitting stations by means of suitable control signals, and the commencement of this is delayed by a length of time which is at least equal to the longest admissible signal transit in the simultaneous broadcasting network.

2. An arrangement according to claim 1, characterized in that the distortion correction network is designed as a base band distortion corector, and the digital test signal is designed as a base band signal.

3. A arrangement according to claim 1 characterized in that the distortion correction network is designed as a bandpass distortion corrector with complex coefficients, and the digital test signal is designed for adaptation as a bandpass signal.

4. An arrangement according to any of claims 1 to 3, characterized in that the digital test signal is formed according to the known laws of the partial-response coding.

5. An arrangement according to any of claims 1 to 4, characterized in that the transversal filter is replaced by an adaptive recursive filter.

6. An arrangement according to claim 1, characterized in that the time-synchronized position of the control signals at the start of the adaptation, is derived from a time signal transmitter, or similar devices.

7. An arrangement according to any of claims 1 to 6, characterized in that for the more accurate and convenient equalization of the signal transit time differences, the transit times in the distortion correction filters amount to no more than the n-th part of the step duration of the digital test signal.

8. An arrangement according to any of claims 1 to 7, characterized in that in the case of large absolute transit time differences of the order of magnitude of the effective length in time of the distortion correction and beyond this, a non-adaptively designed rough, preliminary balancing of the transit takes place in conventional manner.

9. An arrangement according to claims 6 and 8, characterized in that a bucket chain circuit with adjustable cycle is provided at the modulation receivers as a rough preliminary balancing of the transit time, that the digital test signal from the central station is transmitted on a timing pulse derived from the time-signal transmitter, that the modulation receivers have counters which are started afresh with each timing pulse and that the cycle of the bucket chain circuit is adjusted in proportion to the count which the counter has reached upon the arrival of the digital test signal.

10. An arrangement according to claims 6 and 8, characterized in that a bucket chain circuit with adjustable cycle is provided at the modulation receivers as a rough preliminary balancing of the transit time, and also a counter, that the digital test signal from the central station is transmitted on a timing pulse derived from the time signal transmitter and on arrival in the modulation receiver starts the counter, that the counter is stopped with the next timing pulse and that the cycle of the bucket chain circuit is adjusted in inverse proportion to the count then reached by the counter.

11. An arrangement according to claim 9 and 10, characterized in that in place of the bucket chain circuit, passive networks are provided with switchable tappings.

12. An arrangement according to claims 6 and 8, characterized in that the central station and the simultaneous broadcasting transmitters each have a digital clock which is synchronized by the time signal transmitter, that the central station has a logic circuit to which the clock time is fed in binary form, and in which the clock time is advanced by an amount equal to the longest-possible transit time of the modulation feeders, that before the transmission of the digital test signal the advanced clock time is transmitted via the modulation feeders to the simultaneous broadcasting transmitters and is compared there, in a clock time comparator, with the actual clock time, and that the rough preliminary balancing of the transit time takes place automatically to the extent of the clock-time difference determined.

**Revendications**

1. Disposition pour l'émission simultanée de messages à partir d'une centrale (Z) à plusieurs émetteurs sur fréquences communes (S1 à S3), ainsi que pour l'alignement de distorsions d'amplitudes et de phases auxquelles les messages sont soumis sur les circuit de desserte de modulation (MZB1 à MZB3),
    caractérisé par le fait
    - que les récepteurs de modulation des émetteurs sur fréquences communes font état de réseaux correcteurs avec filtre à structure transversale (TVF),
    - que les temps de passage τ dans le filtre à structure transversale sont déterminés par la largeur de bande à corriger sur chacun des circuits de desserte de modulation,
    - que le réglage des coefficients de filtrage du filtre à structure transversale (TVF) est effectué à l'aide d'un signal numérique d'essai ayant une phase de duré τ, émis en tête du toute émission de message ou périodiquement diffusé par la centrale,
    - que le signal d'essai (d) déformé sur le circuit de desserte de modulation est comparé, au récepteur de modulation de chacun des émetteurs sur fréquences communes, à un signal d'essai non déformé (W),
    - que, selon les résultats de cette comparaison, les coefficients de filtrage du filtre à structure transversale (TVF) vont être réglés soit en fonction d'un algorithme de gradient stochastique, soit en fonction d'un autre algorithme d'adaptation connu,
    - que la centrale ainsi que les émetteurs sur fréquences communes disposent de la possibilité de mémorisation (TEST), de commande (STS ou STE) et de comparaison (VER) du signal numérique d'essai,

- que la diffusion synchronisée de messages, par les émetteurs sur fréquences communes, est assurée par le fait que le processus d'adaptation soit accompli simultanément sur toutes les stations d'émission par des signaux de commande appropriés et que le dit processus commence, au plus tard, avec un retard égal à la durée maximale de propagation admissible du signal à l'intérieur du réseau de fréquences communes.

2. Disposition selon la revendication 1, caractérisé par le fait que le réseau correcteur soit conçu en tant que correcteur de la bande de base et que le signal numérique d'essai soit, lui, le signal de la bande de base.

3. Dispositif selon la revendication 1, caractérisé par le fait que le réseau correcteur soit conçu en tant que filtre passe-bande à coefficients complexes et que le signal numérique d'essai fasse office d'adaptateur du signal passe-bande.

4. Disposition selon l'une des revendcations 1 à 3, caractérisé par le fait que le signal numérique d'essai soit formé en fonction de lois physiques connues, propres à la codification de réposes partielles.

5. Disposition selon la revendication 1, caractérisée par le fait que le filtre transversal est remplacé par un filtre adaptateur récursif.

6. Disposition selon la revendication 1, caractérisé par le fait que la synchronisation des signaux de commande pour le lancement de l'adaptation est amorcée par un émetteur de signaux de tops ou par des dispositifs similaires,

7. Disposition selon l'une des revendications 1 à 6, caractérisée par le fait que les temps de propagation dans les filtres d'égalisation ne correspondent plus, pour un alignement encore plus précis et encore plus facile des différences de propagation des signaux, qu'à la $n^{ième}$ partie de la durée de la phase du signal numérique d'essai.

8. Disposition selon l'une des revendications 1 à 7, caractérisée par le fait que, en cas de fortes différences absolues des temps de propagation, de l'ordre de la longeuer d'égalisation effectivement active ou davantage, il est alors effectué, de manière conventionnelle, une pré-égalisation grossière et non adaptative de la propagation,

9. Disposition selon les revendications 6 et 8, caractérisée par le fait

- qu'il est prévu, pour cette grossière pré-égalisation de la propagation, un montage BBD à cadence réglable sur les récepteurs de modulation,
- que le signal numérique d'essai est émis par la centrale sur l'impulsion de synchronisation provenant de l'émetteur de signaux de tops,

- que les récepteurs de modulation sont pourvus de compteurs réinitialisés à chaque impulsion de synchronisation et

- que la cadence du montage BBD est réglée proportionnellement à la valeur momentanée du compteur, c'est-à-dire la valeur accusée par celui-ci au moment ou le signal numérique d'essai lui est parvenu.

10. Dispositif selon les revendications 6 et 8, caractérisé par le fait

- qu'il est prévu, pour cette grossière pré-égalisation de la propagation, un montage BBD à cadence réglable sur les récepteurs de modulation, ainsi qu'un compteur,

- que le signal numérique d'essai est émis par la centrale sur l'impulsion de synchronisation provenant de l'émetteur de signaux de tops et lance le compteur dès qu'il parvient au récepteur de modulation,

- que le compteur va être arrêté à la prochaine impulsion de synchronisation et

- que la cadence du montage BBD est réglée en proportion inverse à la valeur accusée à ce moment par le compteur.

11. Disposition selon la revendication 9 ou 10, caractérisée par le fait qu'il est prèvu, au lieu d'un montage BBD, des réseaux passifs à couplages réglables.

12. Disposition selon les revendications 6 et 8, caractérisée par le fait

- que la centrale et chacun des émetteurs sur fréquences communes font état d'une horloge numérique synchronisée par l'émetteur de tops horaires,

- que la centrale dispose en outre d'un circuit logique destiné à recevoir l'heure sous forme binaire et dans lequel celle-ci va être avancée à la plus grande durée possible de la proparation sur les circuits de desserte de la modulation,

- que, avant l'émission du signal numérique d'essai, cette heure avancée va être transmise, par l'intermédiaire des circuits de desserte de modulation, aux émetteurs sur fréquences communes ou elle va être comparée, par un dispositif comparateur de temps, à l'heure actuelle et

- que cette pré-égalisation grossière de la durée de proparation va être automatiquement réglée à la valeur différentielle déterminée par le comparateur de temps.

**FIG. 1**

FIG. 2

FIG. 3

**0 072 479**

FIG.4

FIG.5

FIG.6